# EUROPÄISCHE PATENTSCHRIFT

(11) **EP 0 875 736 B1**
(45) Veröffentlichungstag und Bekanntmachung des Hinweises auf die Patenterteilung: **16.10.2002**
(21) Anmeldenummer: 98107523.7
(22) Anmeldetag: 24.04.1998
(51) Int. Cl.: G01D 11/24, H01R 9/24

(54) **Gehäuseteil mit integriertem Stecker**
Housing member having an integrated plug
Partie de boîtier avec connecteur intégré

(30) Priorität: 30.04.1997 DE 19718311
(43) Veröffentlichungstag der Anmeldung: 04.11.1998
(73) Patentinhaber: Dr. Johannes Heidenhain GmbH, 83292 Traunreut (DE)
(72) Erfinder: Brunner, Arthur, 83308 Trostberg (DE)

(56) Entgegenhaltungen:
- DE-U- 8 418 488
- DE-U- 8 621 469
- DE-U- 29 718 245
- FR-A- 2 698 492

## Beschreibung

Die Erfindung betrifft ein Gehäuseteil mit integriertem Stecker nach dem Oberbegriff des Anspruchs 1.

Aus dem G 8418488.4 ist eine zylindrische Geberhaube für absolute Winkelkodierer bekannt, an deren Außenseite unmittelbar eine Steckverbindung vorgesehen ist. Durch diese wird der Drehgeber über eine Zuleitung mit weiteren elektrischen Baugruppen verbunden. Hierbei ist der Stecker in die Zylinderform des Gehäuses integriert. Um eine Abdichtung der Steckverbindung zu erreichen, ist zwischen zwei Krägen ein Gummiring vorgesehen. Weiterhin wird durch eine Schraubverbindung sowohl die Steckverbindung gefestigt als auch die Abdichtung durch Druck auf den Gummiring verbessert.

Diese Anordnung weist den Nachteil auf, daß die Steckverbindung zwischen Winkelkodierer und Zuleitung relativ aufwendig und damit teuer ist, obwohl ihre Zuverlässigkeit bei kritischen Anwendungen noch nicht ausreicht. In feuchten Umgebungen und/oder bei großer Vibration können Störungen auftreten. Der Gummi kann durch Alterung oder Verschleiß aufgrund aggressiver Umgebung undicht werden und die Schrauben können oxidieren und brechen.

Daher stellt sich die Aufgabe eine zuverlässige aber gleichzeitig einfache Verbindung anzugeben, die gegen äu3ere Einflüsse geschützt und gleichzeitig preisgünstig zu realisieren ist.

Diese Aufgabe wird durch die im Anspruch 1 angegebenen Merkmale gelöst.

Das erfindungsgemäße Gehäuseteil weist den Vorteil auf, daß die Steckverbindung im Inneren des Gehäuses angeordnet ist und gleichzeitig mit dem Zusammenfügen des Gehäuses erfolgt. Dadurch ist im Außenbereich des Gehäuses nur die Zuleitung zum Gehäuse zugänglich, die an der Durchtrittsstelle fest mit dem Gehäuseteil verbunden und abgedichtet ist. Dabei ist die Abdichtung der Durchtrittsstelle wesentlich einfacher und zuverlässiger zu realisieren als beispielsweise einer lösbaren Verbindung. Der Stecker ist erfindungsgemäß im Inneren des Gehäuses vorgesehen, wodurch die Steckverbindung durch das Gehäuse geschützt wird und somit eine wesentlich einfachere Steckverbindung möglich ist. Von Vorteil ist außerdem die elastische Befestigung des Steckers am Gehäuseteil, was das Schließen der Steckverbindung beim Anbringen des Gehäuseteils am Gehäuse erleichtert und Beschädigungen der Steckverbindung verhindert. Vorteilhaft ist weiterhin eine Zugentlastung, falls das Gehäuseteil unvorschriftsmäßig durch Ausübung einer Kraft an der Zuleitung vom Gehäuse entfernt wird. Außerdem ist vorteilhaft, daß an Gehäuse und Gehäuseteil eine Vorrichtung zum verwechslungsfreien Zusammenfügen von Gehäuse mit Gehäuseteil vorgesehen ist, falls das Gehäuseteil in mehreren Stellungen mit dem Gehäuse zusammengefügt werden kann.

Die Erfindung wird im folgenden anhand der in der Zeichnung dargestellten Ausführungsformen näher erläutert. Es zeigen:
Fig. 1: eine mögliche Ausführungsform eines Gehäuses für einen Drehgeber in geschlossenem Zustand und
Fig. 2: eine mögliche Ausführungsform für das Gehäuseteil bei dem Drehgeber aus Fig. 1.

Im folgenden wird davon ausgegangen, daß das Gehäuseteil eine Kappe für einen Drehgeber ist, der über elektrische Leitungen mit einer Auswerteelektronik verbunden wird.

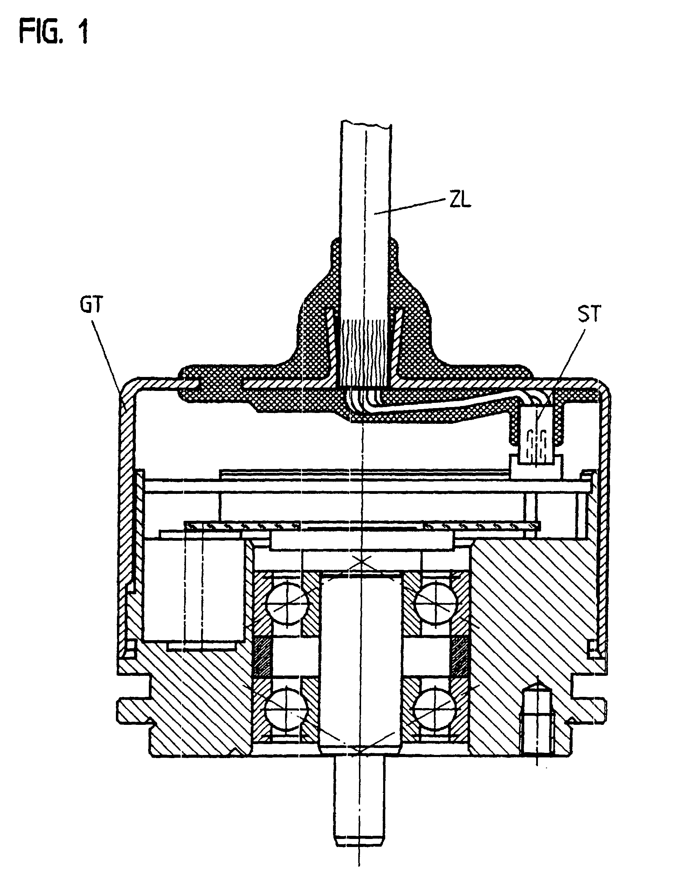

Fig. 1 zeigt eine Ausführungsform der wesentlichen erfindungsgemäßen Merkmale des Drehgbers. Die elektrische Zuleitung ZL zum Drehgeber beinhaltet mindestens drei Leiter, durch die die Versorgungsspannung, Masse und Daten übertragen werden. Diese Leiter werden durch eine gemeinsame äußere Isolierung umgeben. An der Stelle, an der die Zuleitung ZL durch das Gehäuseteil GT hindurchgeführt wird, ist eine Abdichtung vorgesehen. Abhängig von der Umgebung, in der der Drehgeber eingesetzt wird, ist diese Abdichtung zu wählen. Gegebenenfalls muß sie säurefest, hitzebeständig, elastisch und/oder druckunempfindlich sein. Durch die Abdichtung wird die Zuleitung ZL am Gehäuseteil GT fixiert. Dies ermöglicht - bei geeignetem Material - ein Verschmelzen von Abdichtung und Isolierung der Zuleitung, was eine besonders gute Abdichtung ermöglicht.

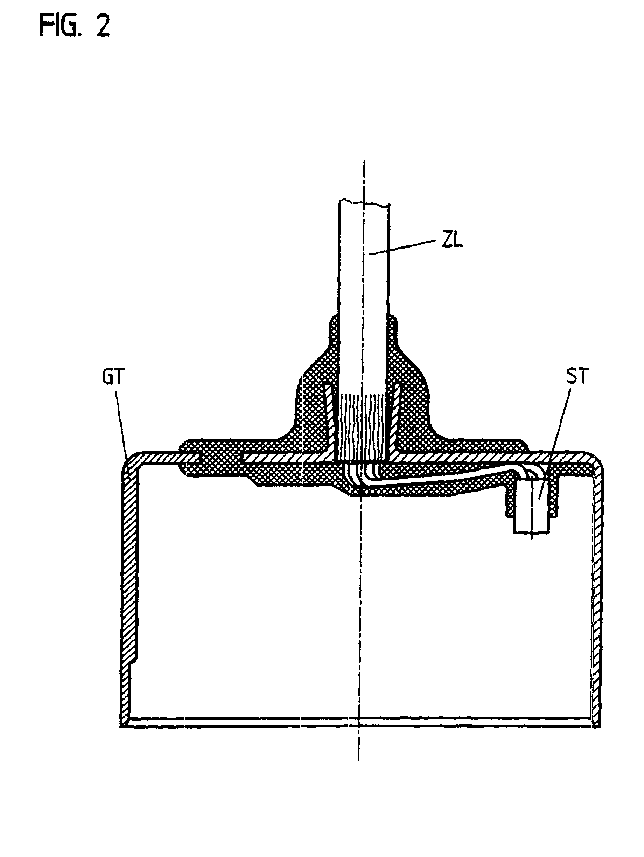

Weiterhin ist eine Zugentlastung vorgesehen, falls bei einer Demontage des Drehgebers das Gehäuseteil GT unvorschriftsmäßig durch Zug an der Zuleitung ZL entfernt wird. Durch die Zugentlastung wird dann verhindert, daß dabei weitere Baugruppen beschädigt werden. Diese Zugentlastung wird durch die Vulkanisierung der Zuleitung ZL an der Innenseite der Durchtrittsstelle durch das Gehäuseteil GT realisiert, wie dies Fig. 2 zeigt.

Die einzelnen Leiter der Zuleitung ZL werden, wie in Fig. 1 dargestellt, anschließend einem Stecker ST zugeführt, der am Gehäuseteil GT elastisch befestigt ist. Diese Befestigung kann durch ein elastisches Zwischenstück zwischen Stecker ST und Gehäuseteil GT erfolgen. Alternativ besteht die Möglichkeit, den Stecker ST über eine elastische Klebung an dem Gehäuseteil GT zu befestigen. Durch die elastische Befestigung wird erreicht, daß auch bei geringfügigen Ungenauigkeiten bei der Positionierung von Stecker ST und dessen Gegenstück eine fehlerfreie Steckverbindung gewährleistet wird und beim Zusammenfügen von Gehäuseteil GT mit dem Gehäuse keine Beschädigungen auftreten.

Ein Gegenstück zu dem Stecker ST ist mit dem übrigen Gehäuse verbunden und befindet sich in dessen Innenraum. Wird nun das übrige Gehäuse mit dem Gehäusetei! GT zusammengefügt, sind der Stecker ST am Gehäuseteil GT und sein Gegenstück auf einer Platine im restlichen Gehäuse derart angeordnet, daß beim Zusammenfügen des Gehäuseteils GT mit dem übrigen Gehäuse der Stecker ST mit seinem Gegenstück automatisch eine elektrische Verbindung realisieren. Beim Entfernen des Gehäuseteils GT wird die Steckverbindung zwischen der Zuleitung ZL und den internen Baugruppen des Drehgebers wieder gelöst.

Dadurch wird beim Einfügen des Gehäuseteils GT in das restliche Gehäuse nicht nur ein Abschluß des Innenraums des Drehgebers gegenüber der Umwelt erreicht, sondern gleichzeitig eine Steckverbindung zwischen Platine im Innenraum und Zuleitung ZL außerhalb des Gehäuses realisiert.

Falls das Gehäuseteil GT derart ausgebildet ist, daß es in verschiedenen Stellungen mit dem restlichen Gehäuse zusammengefügt werden kann, besteht die Gefahr, daß beim Zusammenfügen in einer falschen Stellung eine Beschädigung auftritt. Da man von außen nicht sehen kann, in welcher Stellung die Steckverbindung beim Zusammenfügen korrekt geschlossen wird, sind an Genäuseteil GT und restlichem Gehäuse komplementäre Führungen vorgesehen, beispielsweise Nut und Feder. Dadurch wird ein fehlerhaftes Zusammenfügen des Gehäuseteils GT mit dem restlichen Gehäuse zuverlässig verhindert.

## Patentansprüche

1. Gehäuseteil mit integriertem Stecker, wobei die Zuleitung (ZL) zu einem Stecker (ST) im wesentlichen an der Außenseite des Gehäuseteils (GT) angeordnet, durch das Gehäuseteil (GT) hindurch oder seitlich am Gehäuseteil (GT) vorbei geführt und fest mit dem Gehäuseteil (GT) verbunden ist und der Stecker (ST) mit der Innenseite des Gehäuseteils (GT) verbunden ist, **dadurch gekennzeichnet, daß** der Stecker (ST) über eine elastische Verbindung mit dem Gehäuseteil (GT) verbunden ist.

2. Gehäuseteil nach Anspruch 1, **dadurch gekennzeichnet, daß** die Durchführung der Zuleitung (ZL) an der Außenseite und/oder an der Innenseite des Gehäuseteils (GT) abgedichtet ist.

3. Gehäuseteil nach Anspruch 1 oder 2, **dadurch gekennzeichnet, daß** eine Zugentlastung an der Innenseite des Gehäuseteils (GT) für die Zuleitung (ZL) vorgesehen ist, wodurch eine Zugkraft an der Zuleitung (ZL) die feste Verbindung und die Abdichtung zwischen Zuleitung (ZL) und Gehäuseteil (GT) nicht zerstören kann.

4. Gehäuseteil nach einem der Ansprüche 1 bis 3, **dadurch gekennzeichnet, daß** der Stecker (ST) derart am Gehäuseteil (GT) angeordnet ist, daß beim Schließen des Gehäuses mit dem Gehäuseteil (GT) der Stecker (ST) mit seinem im Gehäuse angeordneten Gegenstück eine Verbindung eingeht.

5. Gehäuseteil nach einem der Ansprüche 1 bis 4, **dadurch gekennzeichnet, daß** am Gehäuseteil (GT) und am Gehäuse eine Vorrichtung zumverwechslungsfreien Zusammenfügen des Gehäuseteils (GT) zu einem im wesentlicher geschlossenen Gehäuse vorgesehen ist.

6. Gehäuseteil nach einem der Ansprüche 1 bis 5, **dadurch gekennzeichnet, daß** das Gehäuseteil (GT) durch eine zylinderförmige, einseitig geschlossene Kappe für einen Drehgeber realisiert wird, welche über ein Gehäuse gestülpt wird, welches auf mindestens einer elektronischen Platine das Gegenstück des Steckers (ST) beinhaltet.

7. Gehäuseteil nach einem der Ansprüche 1 bis 5, **dadurch gekennzeichnet, daß** das Gehäuseteil (GT) durch eine im wesentlichen rechteckige Kappe für einen Abtaskopf eines Längenmeßsystems realisiert wird, welche in ein Gehäuse eingefügt wird, welches auf mindestens einer elektronischen Platine das Gegenstück des Steckers (ST) beinhaltet.

## Claims

1. A housing part with an integrated plug, wherein the connecting lead (ZL) disposed essentially on the outside of the housing part (GT), is fed through or alongside the housing part (GT) and is firmly connected to the housing part (GT) and the plug (ST) is connected to the inside of the housing part (GT), **characterized in that** the plug (ST) is connected to the housing part (GT) by an elastic connection.

2. A housing part according to claim 1, **characterized in that** the feed-through of the connecting lead (ZL) is sealed on the outside and/or the inside of the housing part (GT).

3. A housing part according to claim 1 or 2, **characterized in that** a strain relief for the connecting lead (ZL) is provided on the inside of the housing part (GT), whereby tension on the connecting lead (ZL) cannot destroy the firm connection and the sealing between the connecting lead (ZL) and the housing part (GT).

4. A housing part according to any of claims 1 to 3, **characterized in that** the plug (ST) is so arranged on the housing part (GT) that the plug (ST) makes connection with its counterpart arranged in the housing on closing the housing by the housing part (GT).

5. A housing part according to any of claims 1 to 4, **characterized in that** a device is provided on the housing part (GT) and on the housing for polarised assembly of the housing part (GT) to a substantially closed housing.

6. A housing part according to any of claims 1 to 5, **characterized in that** the housing part (GT) is formed by a cylindrical cap closed at one end for a rotary transducer, which cap is placed over a housing which has the counterpart for the plug (ST) on at least one electronic circuit board.

7. A housing part according to any of claims 1 to 5, **characterized in that** the housing part (GT) is formed by a substantially rectangular cap for a sensing head of a length measuring system, which cap is fitted into a housing which has the counterpart for the plug (ST) on at least one electronic circuit board.

## Revendications

1. Partie de boîtier à connecteur intégré, dans laquelle la ligne d'amenée (ZL) menant à un connecteur (ST) est disposée essentiellement à l'extérieur de la partie de boîtier (GT), traverse la partie de boîtier (GT) ou passe sur le côté de la partie de boîtier (GT) et est fixée à ladite partie de boîtier (GT), dans laquelle le connecteur (ST) est lié à la face intérieure de la partie de boîtier (GT), **caractérisée en ce que** le connecteur (ST) est lié à la partie de boîtier (GT) par une liaison élastique.

2. Partie de boîtier selon la revendication 1, **caractérisée en ce que** le passage de la ligne d'amenée (ZL) est étanche au niveau de la face extérieure et/ou de la face intérieure de la partie de boîtier (GT).

3. Partie de boîtier selon la revendication 1 ou 2, **caractérisée en ce qu'**il est prévu, sur la face intérieure de la partie de boîtier (GT), un dispositif anti-traction pour la ligne d'amenée (ZL), grâce auquel une traction exercée sur la ligne d'amenée (ZL) ne peut pas endommager la liaison fixe ni l'étanchéité entre la ligne d'amenée (ZL) et la partie de boîtier (GT).

4. Partie de boîtier selon une des revendications 1 à 3, **caractérisée en ce que** le connecteur (ST) est disposé sur la partie de boîtier (GT) de telle sorte que lors de la fermeture du boîtier avec la partie de boîtier (GT), le connecteur (ST) établit une liaison avec sa partie complémentaire disposée dans le boîtier.

5. Partie de boîtier selon une des revendications 1 à 4, **caractérisée en ce qu'**il est prévu sur la partie de boîtier (GT) et sur le boîtier un dispositif pour assembler sans risque d'interversion la partie de boîtier (GT) avec un boîtier essentiellement fermé.

6. Partie de boîtier selon une des revendications 1 à 5, **caractérisée en ce que** la partie de boîtier (GT) est formée d'une coiffe cylindrique, fermée d'un côté pour un codeur d'angle, qui est enfoncée sur un boîtier contenant la partie complémentaire du connecteur (ST), sur au moins une platine électronique.

7. Partie de boîtier selon une des revendications 1 à 5, **caractérisée en ce que** la partie de boîtier (GT) est formée d'une coiffe essentiellement rectangulaire pour une tête de palpage d'un dispositif de mesure de longueurs, qui est montée dans un boîtier contenant la partie complémentaire du connecteur (ST), sur au moins une platine électronique.
